# EUROPÄISCHE PATENTSCHRIFT

(11) **EP 2 619 480 B1**
(45) Veröffentlichungstag und Bekanntmachung des Hinweises auf die Patenterteilung: **06.04.2016**
(21) Anmeldenummer: 11738747.2
(22) Anmeldetag: 03.08.2011
(51) Int. Cl.: F16H 61/02, F16H 61/21

(54) **VERFAHREN ZUR SCHALTSTEUERUNG EINES AUTOMATISIERTEN STUFENSCHALTGETRIEBES**
METHOD FOR CONTROLLING SHIFTING IN A SEMI-AUTOMATIC GEAR TRANSMISSION
PROCÉDÉ DE COMMANDE DES PASSAGES DE RAPPORT D'UNE BOÎTE DE VITESSES AUTOMATISÉE

(30) Priorität: 24.09.2010 DE 102010041324
(43) Veröffentlichungstag der Anmeldung: 31.07.2013
(73) Patentinhaber: ZF Friedrichshafen AG, 88038 Friedrichshafen (DE)
(72) Erfinder: WÜRTHNER, Maik, 88677 Markdorf (DE); MAIER, Alexander, 88046 Friedrichshafen (DE); STAUDINGER, Joachim, 87700 Memmingen (DE); KEMLER, Johannes, 88212 Ravensburg (DE)
(86) Internationale Anmeldenummer: PCT/EP2011/063383
(87) Internationale Veröffentlichungsnummer: WO 2012/038139

(56) Entgegenhaltungen:
- EP-A2- 1 750 038
- DE-A1- 4 446 111
- DE-A1- 10 142 274
- DE-A1-102005 050 753
- DE-A1-102006 001 818

## Beschreibung

Die Erfindung betrifft ein Verfahren zur Schaltsteuerung eines automatisierten Stufenschaltgetriebes gemäß dem Oberbegriff des Patentanspruchs 1.

Moderne Stufenschaltgetriebe, wie automatisierte Schaltgetriebe, Planeten-Automatgetriebe und Doppelkupplungsgetriebe, können sowohl in einem Manuellmodus als auch in einem Automatikmodus betrieben werden. Im Manuellmodus können Schaltungen unmittelbar durch den Fahrer ausgelöst werden, beispielsweise indem der Fahrer mit der Hand einen dafür vorgesehenen Schalthebel in eine Hochschaltrichtung oder in eine Rückschaltrichtung auslenkt. Im Automatikmodus werden Schaltungen dagegen automatisiert ausgelöst, indem aktuelle fahrzeug-, fahrbahn-, und fahrerspezifische Betriebsparameter ermittelt und Schaltungen anhand von Schaltkennfeldern oder Schaltkennlinien ausgelöst werden. Zu diesen Betriebsparameter kann die aktuelle Fahrgeschwindigkeit, die aktuelle Fahrbeschleunigung, die aktuelle Motordrehzahl, das aktuelle Motormoment, die aktuelle Fahrzeugmasse, die aktuelle Fahrbahnneigung (Steigung, Ebene, Gefälle), der aktuelle Fahrwiderstand und der aktuelle Fahrerwunsch (Leistungsanforderung des Fahrers oder einer Geschwindigkeitsregelanlage, bzw. Tempomat™) gehören. Die aktuellen Betriebsparameter können entweder unmittelbar gemessen oder aus gemessenen Werten berechnet werden. Ebenso kann der jeweilige aktuelle Gradient zumindest einiger Betriebsparameter bestimmt und zur Schaltsteuerung genutzt werden. Beispielsweise kann der aktuelle Fahrerwunsch mittels einer zugeordneten Kennlinie aus der über ein Potentiometer messbaren Stellung des Fahrpedals abgeleitet werden. Hierzu kann zusätzlich auch die berechenbare Änderungsrate der Fahrpedalstellung über die Zeit, also die Stellgeschwindigkeit, herangezogen werden.

Die auf aktuellen Betriebsparametern und gegebenenfalls auch auf deren Gradienten basierende Schaltsteuerung automatisierter Stufenschaltgetriebe liefert in den meisten Betriebssituationen gute Ergebnisse, etwa eine hohe Fahrdynamik, einen niedrigen Kraftstoffverbrauch und einen hohen Schalt- und Fahrkomfort. Im Schubbetrieb ergeben sich jedoch besonders im Übergang zwischen unterschiedlichen Fahrbahngefällen und Fahrwiderständen häufig zu späte oder ungünstige Schaltungen, da konventionelle Verfahren zur Schaltsteuerung die Topographie des dem Kraftfahrzeug vorausliegenden Streckenabschnitts nicht oder nur unzureichend berücksichtigen.

So wird beispielsweise ein Übergang einer Gefällestrecke in einen Streckenabschnitt mit größerem Gefälle anhand aktueller Betriebsparameter häufig zu spät erkannt, so dass das Kraftfahrzeug unter der Wirkung einer erhöhten Hangabtriebskraft schon beschleunigt und eine zur Begrenzung der Fahrgeschwindigkeit erforderliche Schub-Rückschaltung verspätet und somit bei erhöhter Fahrgeschwindigkeit ausgelöst wird. Andererseits kann eine Schub-Rückschaltung aufgrund eines aktuell größeren Gefälles der Fahrbahn nicht selten unnötig ausgelöst werden, wenn die Gefällestrecke in kurzem Abstand danach wieder in einen Streckenabschnitt mit geringerem Gefälle übergeht, was dann wieder eine Schub-Hochschaltung nach sich ziehen würde.

Ebenso wird bei einem Übergang von einem Gefälle in eine Ebene der betreffende Gefälleauslauf aufgrund aktueller Betriebsparameter häufig zu spät erkannt, so dass eine in diesem Fall zweckmäßige Schub-Hochschaltung zu spät ausgelöst wird, wodurch der Schwung des Kraftfahrzeugs (potentielle und kinetische Energie) nur unzureichend ausgenutzt wird und früher als möglich in den Zugbetrieb übergegangen werden muss. Andererseits kann eine Schub-Hochschaltung aufgrund eines aktuell geringeren Gefälles der Fahrbahn auch unnötig ausgelöst werden, wenn die Gefällestrecke in kurzem Abstand danach wieder in einen Streckenabschnitt mit größerem Gefälle übergeht, was dann wieder eine Schub-Rückschaltung erforderlich machen würde.

Zur weiteren Verbesserung des Schaltverhaltens automatisierter Stufenschaltgetriebe sind daher schon einige Verfahren und Vorrichtungen vorgeschlagen worden, welche die Erfassung von auf einen dem Kraftfahrzeug vorausliegenden Streckenabschnitt bezogenen topographischen Daten, insbesondere des Höhenprofils, und deren Berücksichtigung bei der Schaltsteuerung eines automatisierten Stufenschaltgetriebes vorsehen.

So wird in der DE 101 42 274 A1 ein Verfahren zur Steuerung und/oder Regelung der Fahrzeuggeschwindigkeit vorgeschlagen, bei dem in Verbindung mit einem Betrieb einer Bremsregelanlage (Bremsomat) und/oder einer Geschwindigkeitsregelanlage (Tempomat™) die Bremsomat- bzw. Tempomat-Sollgeschwindigkeit dynamisch verändert wird. Das bekannte Verfahren sieht vor, dass durch die Auswertung von aktuellen Betriebsparametern, deren Gradienten und fahrstreckenbezogenen Informationen, wie insbesondere Topographiedaten, eine Einfahrt in eine Steigung sowie in einen Gefälleauslauf erkannt werden, und in diesen Fällen jeweils die Bremsomat- bzw. Tempomat-Sollgeschwindigkeit rechtzeitig erhöht wird.

In der gattungsgemäßen DE 10 2006 001 818 A1 sind ein Verfahren und eine Vorrichtung zur Fahrerunterstützung beim Fahrbetrieb eines Nutzfahrzeugs beschrieben, bei denen die auf einen dem Kraftfahrzeug vorausliegenden Streckenabschnitt der Fahrtroute bezogenen Topographiedaten aus einem Speicher abgerufen und bei der Einstellung von Fahrbetriebskomponenten, insbesondere bei der Einstellung eines Gangs des Schaltgetriebes durch die Getriebesteuerung, rechnergestützt ausgewertet werden. Die Topographiedaten können in Form eines Höhenprofils oder eines Steigungsprofils der jeweiligen Fahrtroute abgespeichert sein.

Schließlich sind aus der DE 10 2005 050 753 A1 ein Verfahren und eine Vorrichtung zur Steuerung und/oder Regelung eines automatischen Systems eins Kraftfahrzeugs bekannt, bei denen zur Erfassung einer vor dem Kraftfahrzeug liegenden Fahrstrecke Daten erfasst und zu einem Fahrwiderstandsprofil des Kraftfahrzeugs zusammengefasst werden. Das ermittelte Fahrwiderstandsprofil soll unter anderem dazu genutzt werden, in einem Automatgetriebe eine zur Bewältigung der vor dem Kraftfahrzeug liegenden Fahrstrecke geeignete Getriebeübersetzung einzustellen.

Die bekannten Verfahren und Vorrichtungen liefern zwar brauchbare Ansätze zur Verbesserung des Schaltverhaltens automatisierter Stufenschaltgetriebe. Konkrete Angaben darüber, wie aus den auf den dem Kraftfahrzeug vorausliegenden Streckenabschnitt bezogenen Topographiedaten, wie dem Höhenprofil, dem Steigungsprofil oder dem Fahrwiderstandsprofil, bestimmte Steuerbefehle abgeleitet und in der Getriebesteuerung umgesetzt werden sollen, sind den vorgenannten Druckschriften jedoch nicht zu entnehmen.

Vor diesem Hintergrund liegt der Erfindung die Aufgabe zugrunde, ein Verfahren zur Schaltsteuerung eines automatisierten Stufenschaltgetriebes der eingangs genannten Art anzugeben, mit dem im Automatikmodus während eines Schubbetriebs aus dem Fahrwiderstandsprofil des Kraftfahrzeugs für den vorausliegenden Streckenabschnitt konkrete Steuerbefehle für Schub-Rückschaltungen und/oder Schub-Hochschaltungen abgeleitet und mit möglichst geringem Steuerungsaufwand umgesetzt werden.

Diese Aufgabe ist durch die Merkmale des Anspruchs 1 gelöst.

Vorteilhafte Ausgestaltungen und Weiterbildungen des erfindungsgemäßen Verfahrens sind Gegenstand der Unteransprüche.

Die Erfindung geht demnach aus von einem an sich bekannten automatisierten Stufenschaltgetriebe, das in einem mit einer Dauerbremse, wie einer Motorbremse und/oder einem Retarder, versehenen Antriebsstrang eines Kraftfahrzeugs zwischen einem als Verbrennungsmotor ausgebildeten Antriebsmotor und einem Achsantrieb angeordnet ist. Während der Fahrt werden fortlaufend, d.h. in einem bestimmten Zeittakt oder Fahrwegabstand, neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das jeweilige Höhenprofil, ermittelt. Aus dem sich daraus ergebenden Steigungsprofil kann in Kenntnis der Fahrzeugmasse, des Luftwiderstandsbeiwertes des Fahrzeug und des Rollwiderstandsbeiwertes für jeden Wegpunkt der Fahrwiderstand nach der bekannten Fahrwiderstandsformel F_{FW} = F_{Luft} + F_{Roll} + F_{Steig} als Summe aus dem Luftwiderstand F_{Luft,} dem Rollwiderstand F_{Roll} und dem Steigungswiderstand F_{Steig} und somit insgesamt das Fahrwiderstandsprofil F_{FW}(x_{F}) des Kraftfahrzeugs für den vorausliegenden Streckenabschnitt bestimmt werden. Wenn das Stufenschaltgetriebe im Automatikmodus betrieben wird und sich das Kraftfahrzeug im Schubbetrieb befindet, werden Steuerbefehle für Schub-Rückschaltungen und/oder Schub-Hochschaltungen in Abhängigkeit von dem Fahrwiderstandsprofil F_{FW}(x_{F}) abgeleitet und durchgeführt. Diese Vorgehensweise ist in allgemeiner Form z.B. aus der DE 10 2005 050 753 A1 bekannt.

Das Verfahren gemäß der Erfindung umfasst nun die Ableitung konkreter Steuerbefehle für Schub-Rückschaltungen und/oder Schub-Hochschaltungen in Abhängigkeit von dem Fahrwiderstandsprofil und deren Umsetzung innerhalb der Getriebesteuerung eines automatisierten Stufenschaltgetriebes. Hierzu ist vorgesehen, dass ausgehend von der aktuellen Fahrgeschwindigkeit, der aktuellen Motordrehzahl und dem Fahrwiderstandsprofil die Verläufe der maximalen Dauerbremskraft, die in dem vorausliegenden Streckenabschnitt in dem aktuell eingelegten Gang sowie in dazu benachbarten Gängen jeweils möglich sind, bestimmt werden, und dass die Verläufe der maximalen Dauerbremskraft zur Ableitung von Steuerbefehlen für eine Schub-Rückschaltung und/oder eine Schub-Hochschaltung in Relation zu dem Fahrwiderstandsprofil bewertet werden.

Dies bedeutet, dass anhand der relativen Verläufe des Fahrwiderstands und der maximalen Dauerbremskraft der betreffenden Gänge entschieden wird, ob abweichend bzw. ergänzend zu der normalen Schaltsteuerung eine Schub-Rückschaltung und/oder eine Schub-Hochschaltung vorzeitig ausgelöst oder gesperrt werden soll. Auf dieser Grundlage können auf einfache Weise eindeutige Entscheidungskriterien für die Auslösung bzw. Sperrung von Schubschaltungen abgeleitet werden.

Zur Ableitung von Steuerbefehlen für eine Schub-Rückschaltung sieht das erfindungsgemäße Verfahren vor, dass die Verläufe der maximalen Dauerbremskraft, die in dem vorausliegenden Streckenabschnitt in dem aktuell eingelegten Gang und in einer festgelegten Anzahl niedrigerer Gänge möglich sind, bestimmt und in Relation zu dem Fahrwiderstandsprofil bewertet werden.

Demzufolge wird eine Schub-Rückschaltung dann vorzeitig, d.h. vor der Auslösung einer Schub-Hochschaltung durch die normale Schaltsteuerung oder durch einen aktiven Bremsomaten, ausgelöst, wenn der Verlauf der maximalen Dauerbremskraft für den aktuell eingelegten Gang ausgehend von der aktuellen Fahrzeugposition den Verlauf des Fahrwiderstandsprofils innerhalb einer vorgegebenen ersten Grenz-Fahrzeit oder Grenz-Fahrstrecke überschreitet und nachfolgend innerhalb einer vorgegebenen zweiten Grenz-Fahrzeit oder Grenz-Fahrstrecke nicht unterschreitet. Andernfalls, d.h. wenn mindestens eine der beiden Bedingungen nicht erfüllt ist, wird eine Schub-Rückschaltung gesperrt, so dass diese auch durch die normale Schaltsteuerung, z.B. aufgrund eines aktuell kurzfristig steileren Gefälles, nicht ausgelöst werden kann.

Als Zielgang der Schub-Rückschaltung wird zweckmäßig der höchstmögliche der betreffenden niedrigeren Gänge bestimmt, dessen Verlauf der maximalen Dauerbremskraft den Verlauf des Fahrwiderstandsprofils nach dem Auftreten des Bremskraftmangels in dem aktuell eingelegten Gang G₀ innerhalb der zweiten Grenz-Fahrzeit oder Grenz-Fahrstrecke nicht überschreitet. Hierdurch ist sichergestellt, dass nach Durchführung der Schub-Rückschaltung kein Bremskraftmangel mehr besteht und das Kraftfahrzeug somit die aktuelle Fahrgeschwindigkeit halten kann.

Wenn diese Bedingung jedoch für keinen der niedrigeren Gänge erfüllt ist, d.h. auch der Verlauf der maximalen Dauerbremskraft des niedrigsten dieser Gänge den Verlauf des Fahrwiderstandsprofils nach dem Auftreten des Bremskraftmangels (in dem aktuell eingelegten Gang) innerhalb der zweiten Grenz-Fahrzeit oder Grenz-Fahrstrecke überschreitet, wird der niedrigste der betreffenden niedrigeren Gänge als Zielgang der Schub-Rückschaltung bestimmt. Hierdurch wird der Bremskraftmangel zwar nicht sicher gelöst, aber zumindest reduziert. Ob zur vollständigen Beseitigung des Bremskraftmangels eine weitere Rückschaltung erforderlich ist, ergibt sich im nächsten Zyklus des Programmablaufs, in dem dann die Ermittlung und Beurteilung der Verläufe der maximalen Dauerbremskraft ausgehend von dem dann eingelegten niedrigeren Gang erfolgt.

Zur vorzeitigen Auslösung einer Schub-Rückschaltung kann der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils ersetzt werden, in dem der Verlauf der maximalen Dauerbremskraft für den aktuell eingelegten Gang über dem Verlauf des Fahrwiderstandsprofils liegt, d.h. ein Bremskraftmangel vorliegt. Die Auslösung der Schub-Rückschaltung erfolgt dann über die normale Schaltsteuerung durch den künstlich bzw. vorausschauend abgesenkten, also im Betrag erhöhten Wert des aktuellen Fahrwiderstands.

Bei einem Bremsomatbetrieb kann zur vorzeitigen Auslösung einer Schub-Rückschaltung auch die Sollgeschwindigkeit des Bremsomaten vorübergehend reduziert werden, wodurch der Bremsomat durch die Anforderung einer erhöhten Dauerbremskraft an die normale Schaltsteuerung die Schub-Rückschaltung auslösen kann.

Analog dazu kann zur Sperrung einer Schub-Rückschaltung der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils ersetzt werden, in dem der Verlauf der maximalen Dauerbremskraft für den aktuell eingelegten Gang unter dem Verlauf des Fahrwiderstandsprofils liegt, d.h. kein Bremskraftmangel vorliegt.

Ebenso kann im Bremsomatbetrieb zur Sperrung einer Schub-Rückschaltung die Sollgeschwindigkeit v_{Soll} des Bremsomaten vorübergehend erhöht werden.

Zur Ableitung von Steuerbefehlen für eine Schub-Hochschaltung sieht das erfindungsgemäße Verfahren vor, dass zusätzlich die Verläufe der maximalen Dauerbremskraft, die in dem vorausliegenden Streckenabschnitt in einer festgelegten Anzahl höherer Gänge jeweils möglich sind, bestimmt und in Relation zu dem Fahrwiderstandsprofil bewertet werden.

Demzufolge wird eine Schub-Hochschaltung dann vorzeitig ausgelöst, wenn der Verlauf der maximalen Dauerbremskraft für den aktuell eingelegten Gang ausgehend von der aktuellen Fahrzeugposition innerhalb einer vorgegebenen ersten Grenz-Fahrzeit oder Grenz-Fahrstrecke den Verlauf des Fahrwiderstandsprofils unterschreitet oder unter diesem liegt, und wenn nachfolgend der Verlauf der maximalen Dauerbremskraft mindestens eines höheren Gangs den Verlauf des Fahrwiderstandsprofils innerhalb einer vorgegebenen zweiten Grenz-Fahrzeit oder Grenz-Fahrstrecke nicht überschreitet. Andernfalls, d.h. wenn mindestens eine der beiden Bedingungen nicht erfüllt ist, wird eine Schub-Hochschaltung gesperrt, so dass diese auch durch die normale Schaltsteuerung, z.B. aufgrund eines aktuell kurzfristig flacheren Gefälles und demnach irrtümlich erkannten Gefälleauslaufs, nicht ausgelöst werden kann.

Als Zielgang der Schub-Hochschaltung wird bevorzugt der höchstmögliche der höheren Gänge bestimmt, dessen Verlauf der maximalen Dauerbremskraft den Verlauf des Fahrwiderstandsprofils innerhalb der zweiten Grenz-Fahrzeit oder Grenz-Fahrstrecke nicht überschreitet. Hierdurch ist sichergestellt, dass in dem höheren Gang kein Bremskraftmangel auftritt. Wenn diese Bedingung jedoch für keinen der höheren Gänge erfüllt ist, wird eine Schub-Hochschaltung ebenfalls gesperrt, da diese dann ohne das Auftreten von Bremskraftmangel nicht möglich ist.

Zur vorzeitigen Auslösung einer Schub-Hochschaltung kann der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils ersetzt werden, in dem der Verlauf der maximalen Dauerbremskraft für den aktuell eingelegten Gang unter dem Verlauf des Fahrwiderstandsprofils liegt. Die Auslösung der Schub-Hochschaltung erfolgt dann über die normale Schaltsteuerung durch den künstlich bzw. vorausschauend erhöhten, d.h. im Betrag abgesenkten Wert des aktuellen Fahrwiderstands.

Im Bremsomatbetrieb kann zur vorzeitigen Auslösung einer Schub-Hochschaltung auch die Sollgeschwindigkeit des Bremsomaten vorübergehend erhöht werden, wodurch der Bremsomat durch die Anforderung einer geringeren Dauerbremskraft an die normale Schaltsteuerung die Schub-Hochschaltung auslösen kann.

Analog dazu kann zur Sperrung einer Schub-Hochschaltung der Wert des aktuellen Fahrwiderstands durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils ersetzt werden, in dem der Verlauf der maximalen Dauerbremskraft für den aktuell eingelegten Gang über dem Verlauf des Fahrwiderstandsprofils liegt.

Ebenso kann im Bremsomatbetrieb zur Sperrung einer Schub-Hochschaltung die Sollgeschwindigkeit des Bremsomaten vorübergehend reduziert werden.

Die vorzeitige Auslösung einer Schub-Rückschaltung erfolgt bevorzugt innerhalb der Fahrzeit oder Fahrstrecke bis zum Auftreten eines Bremskraftmangels in dem aktuell eingelegten Gang, da hierdurch das Auftreten eines längeren Bremskraftmangels sicher verhindert wird. Die vorzeitige Auslösung einer Schub-Hochschaltung erfolgt dagegen vorteilhaft innerhalb der ersten Grenz-Fahrzeit oder Grenz-Fahrstrecke, da hierdurch eine frühe Ausführung der Schub-Hochschaltung ohne das Auftreten eines Bremskraftmangels sichergestellt wird.

Die Anzahl niedrigerer Gänge und die Anzahl höherer Gänge, für welche die Verläufe der maximalen Dauerbremskraft ermittelt werden, können jeweils fest vorgegeben sein, z.B. auf zwei begrenzt sein.

Es ist jedoch auch möglich, dass die Anzahl niedrigerer Gänge und die Anzahl höherer Gänge, für welche die Verläufe der maximalen Dauerbremskraft ermittelt werden, jeweils als die Anzahl der Gänge bis einschließlich des mit dem höchstzulässigen Gangsprung erreichbaren niedrigeren bzw. höheren Gangs bestimmt wird.

Da das Erreichen der jeweiligen maximalen Dauerbremskraft eine entsprechende Betätigung der vorhandenen Dauerbremsen erfordert, kann aus Sicherheitsgründen vorgesehen sein, dass die Funktion zur vorzeitigen Auslösung und Sperrung einer Schub-Rückschaltung und/oder einer Schub-Hochschaltung nur im Bremsomatbetrieb aktiviert wird.

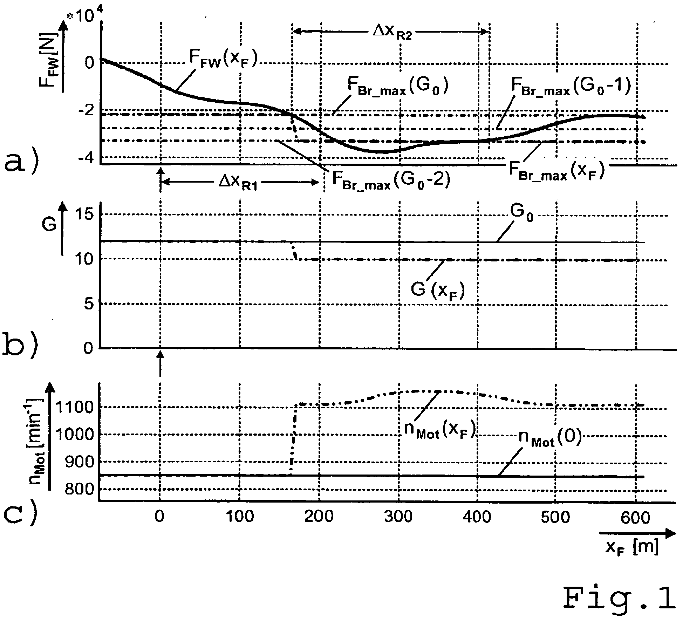

Zur Verdeutlichung der Erfindung ist der Beschreibung eine Zeichnung mit Ausführungsbeispielen beigefügt. In dieser zeigt
- Fig. 1: ein dreiteiliges Diagramm mit einem Fahrwiderstandsverlauf und einem Bremskraftverlauf (Teil a), einem Gangverlauf (Teil b) und einem Motordrehzahlverlauf (Teil c), jeweils über der Fahrstrecke, zur Erläuterung der vorzeitigen Auslösung einer Schub-Rückschaltung bei sinkendem Fahrwiderstand, und

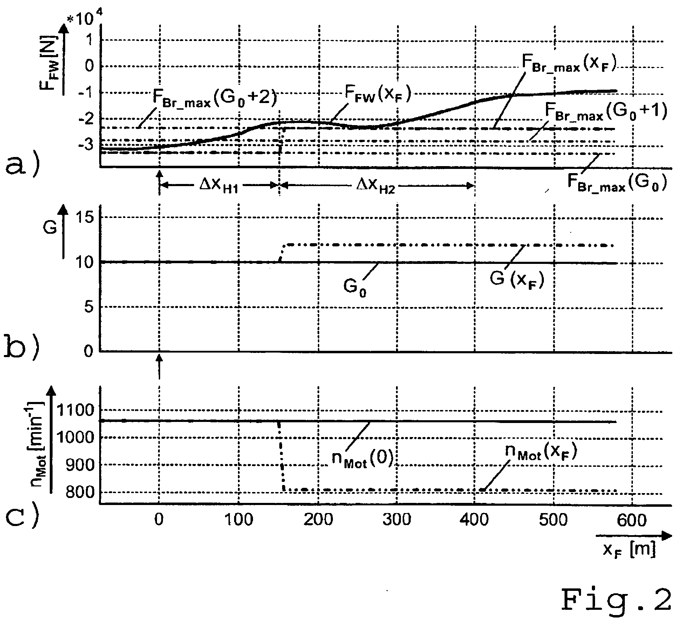

- Fig. 2: ein dreiteiliges Diagramm mit einem Fahrwiderstandsverlauf und einem Bremskraftverlauf (Teil a), einem Gangverlauf (Teil b) und einem Motordrehzahlverlauf (Teil c), jeweils über der Fahrstrecke, zur Erläuterung der vorzeitigen Auslösung einer Schub-Hochschaltung bei ansteigendem Fahrwiderstand.

In Fig. 1 ist in Teil a) das aus topographischen Daten, insbesondere dem Höhenprofil, eines einem Kraftfahrzeug vorausliegenden Streckenabschnitts bestimmte Fahrwiderstandsprofil F_{FW}(x_{F}) des betreffenden Kraftfahrzeugs über der Fahrstrecke x_{F} abgebildet, wobei die aktuelle Fahrzeugposition dem Wegpunkt x_{F} = 0 entspricht. Bei dem Kraftfahrzeug handelt es sich um ein schweres Nutzfahrzeug mit einer Fahrzeugmasse von m_{Fzg} = 40.000 kg. In Teil b) von Fig. 1 ist mit G₀ = 12 der aktuell eingelegte Gang angegeben. In Teil c) von Fig. 1 ist mit n_{Mot}(0) = 850 min⁻¹ die aktuelle Drehzahl des Antriebsmotors dargestellt.

In der in Fig. 1 dargestellten Betriebsphase befindet sich das Kraftfahrzeug im so genannten Bremsomatbetrieb, in dem eine von dem Fahrer eingestellte Sollgeschwindigkeit durch eine entsprechende Ansteuerung vorhandener Dauerbremsen, wie einer Motorbremse und eines Retarders, konstant gehalten wird, solange die an den Antriebsrädern des Kraftfahrzeugs wirksame maximal mögliche Dauerbremskraft F_{Br_max} kleiner oder gleich, d.h. im Betrag größer oder gleich dem jeweiligen (negativen) Fahrwiderstand F_{FW} ist.

Aus dem Verlauf des abgebildeten Fahrwiderstandsprofils F_{FW}(x_{F}) ist erkennbar, dass sich das Kraftfahrzeug im bzw. unmittelbar vor einem Übergang in einen Streckenabschnitt mit deutlich höherem Gefälle von ca. 10% befindet, in dem ein im Betrag maximaler Fahrwiderstand von etwa F_{FW} = - 40 kN auftritt. Während die maximale Dauerbremskraft F_{Br_max} im aktuell eingelegten Gang G₀ = 12 mit etwa F_{Br_max} = - 22 kN zum aktuellen Zeitpunkt (x_{F} = 0) noch ausreicht, um den Fahrwiderstand F_{FW}(0) zu kompensieren und eine unerwünschte Beschleunigung des Kraftfahrzeugs zu verhindern, ist dies ab etwa 170 m vor dem Kraftfahrzeug nicht mehr der Fall. Ab diesem Wegpunkt (x_{F} = 170 m) unterschreitet der (negative) Fahrwiderstand F_{FW} aufgrund des zunehmenden Fahrbahngefälles nämlich die maximale Dauerbremskraft F_{Br_max}(G₀) im aktuell eingelegten Gang, so dass das Kraftfahrzeug danach ohne eine rechtzeitige Schub-Rückschaltung ungewollt beschleunigen würde.

Zur Vermeidung dieser Fahrsituation ist erfindungsgemäß vorgesehen, dass das mögliche Auftreten einer derartigen Fahrsituation vorausschauend erkannt und in diesem Fall zur Erhöhung der maximalen Dauerbremskraft F_{Br_max} vorzeitig, d.h. bevor dies durch die normale Schaltsteuerung oder durch einen aktiven Bremsomaten anhand von aktuellen Betriebsparametern und gegebenenfalls deren Gradienten geschieht, eine Schub-Rückschaltung ausgelöst wird.

Hierzu werden auf einen dem Kraftfahrzeug vorausliegenden Streckenabschnitt bezogene topographische Daten, insbesondere das Höhenprofil, ermittelt und daraus das Fahrwiderstandsprofil F_{FW}(x_{F}) des Kraftfahrzeugs für den vorausliegenden Streckenabschnitt bestimmt. Zusätzlich werden hierzu auch die Verläufe der maximalen Dauerbremskraft F_{Br_max}(x_{F}), die in dem vorausliegenden Streckenabschnitt in dem aktuell eingelegten Gang G₀ und in einer festgelegten Anzahl niedrigerer Gänge, vorliegend beispielhaft der beiden niedrigeren Gänge (G₀ - 1 = 11 und G₀ - 2 = 10), möglich sind, bestimmt und in Relation zu dem Fahrwiderstandsprofil F_{FW}(x_{F}) bewertet.

Wenn nun der Verlauf der maximalen Dauerbremskraft F_{Br_max}(G₀) für den aktuell eingelegten Gang G₀ ausgehend von der aktuellen Fahrzeugposition (x_{F} = 0) den Verlauf des Fahrwiderstandsprofils F_{FW}(x_{F}) innerhalb einer vorgegebenen ersten Grenz-Fahrstrecke von vorliegend beispielhaft Δx_{R1} = 200 m überschreitet (bzw. der Verlauf der maximalen Dauerbremskraft F_{Br_max}(G₀) von dem Fahrwiderstandsprofil F_{FW}(x_{F}) unterschritten wird) und nachfolgend innerhalb einer vorgegebenen zweiten Grenz-Fahrstrecke von vorliegend beispielhaft Δx_{R2} = 250 m nicht unterschreitet, gilt eine derartige Fahrsituation im Vorfeld des Kraftfahrzeugs als erkannt, so dass dann eine Schub-Rückschaltung vorzeitig ausgelöst wird. Andernfalls, d.h. wenn mindestens eine dieser Bedingungen nicht erfüllt ist, wird eine Schub-Rückschaltung gesperrt, so dass diese auch nicht durch die normale Schaltsteuerung oder durch einen aktiven Bremsomaten, z.B. aufgrund des Überschreitens einer Schaltdrehzahl oder einer Sollgeschwindigkeit, ausgelöst werden kann.

Als Zielgang der betreffenden Schub-Rückschaltung wird der höchstmögliche der betreffenden niedrigeren Gänge (G₀ - 1, G₀ - 2) bestimmt, dessen Verlauf der maximalen Dauerbremskraft F_{Br_max}(G₀ - 1), F_{Br_max}(G₀ - 2) den Verlauf des Fahrwiderstandsprofils F_{FW}(x_{F}) nach dem Auftreten des Bremskraftmangels in dem aktuell eingelegten Gang G₀ innerhalb der zweiten Grenz-Fahrstrecke Δx_{R2} nicht überschreitet.

Da dem in Fig. 1 dargestellten Beispiel diese Bedingung jedoch für keinen der beiden niedrigeren Gänge (G₀ - 1, G₀ - 2) erfüllt ist, wird der niedrigste dieser beiden Gänge, also G = G₀ - 2 = 10, als Zielgang der Schub-Rückschaltung bestimmt. Vorliegend wird die Schub-Rückschaltung in den zehnten Gang beispielhaft zum Zeitpunkt des Auftretens des Bremskraftmangels nach etwa x_{F} = 170 m durchgeführt. Bedarfsweise kann diese Schaltung jedoch auch früher, d.h. zu einem beliebig wählbaren Zeit- oder Wegpunkt x_{F} zwischen dem aktuellen Zeitpunkt (t = 0, x_{F} = 0) und dem Auftreten des Bremskraftmangels bei x_{F} = 170 m, ausgelöst werden, was z.B. über das Starten eines Zeit- oder Wegstreckenzählers gesteuert werden kann.

Die Schub-Rückschaltung äußert sich in einem sprunghaften Anstieg der (negativen) maximalen Dauerbremskraft F_{Br_max}(x_{F}) (siehe Fig. 1 a), in dem Wechsel vom zwölften Gang in den zehnten Gang (siehe Fig. 1 b), und in einem sprunghaften Anstieg der Motordrehzahl n_{Mot}(x_{F}) von der aktuellen Motordrehzahl von ca. n_{Mot}(0) = 850 min⁻¹ auf etwa n_{Mot} = 1110 min⁻¹ (siehe Fig. 1 c).

Wie in Teil a) von Fig. 1 erkennbar ist, unterschreitet der Verlauf des Fahrwiderstands F_{FW}(x_{F}) nach der Durchführung der Schub-Rückschaltung etwa bei x_{F} = 220 m zwar die maximale Dauerbremskraft F_{Br_max}(x_{F}). Da dies aber nur kurzzeitig und in relativ geringem Umfang erfolgt, ist keine weitere Schub-Rückschaltung erforderlich. Die durch den Bremskraftmangel bedingte vorübergehende Beschleunigung, die sich in einer vorübergehenden Erhöhung der Motordrehzahl n_{Mot}(x_{F}) äußert (siehe Fig. 1 c), wird nachfolgend durch eine entsprechende Ansteuerung der Dauerbremsen durch den Bremsomaten schnell wieder ausgeglichen.

In den analog zu Fig. 1 aufgebauten Diagrammen von Fig. 2 ist nun beispielhaft eine Fahrsituation veranschaulicht, in der sich das Kraftfahrzeug bei eingelegtem zehnten Gang (G₀ = 10) im Schubbetrieb vor einem Gefälleauslauf befindet. Ein Gefälleauslauf sollte frühzeitig erkannt werden, damit rechtzeitig eine Schub-Hochschaltung ausgelöst werden kann, wodurch der Schwung, d.h. die kinetische und potentielle Energie, des Kraftfahrzeugs besser ausgenutzt und in der Ebene später in den Zugbetrieb übergegangen werden kann.

Hierzu werden erfindungsgemäß neben der Ermittlung des Fahrwiderstandsprofils F_{FW}(x_{F}) des Kraftfahrzeugs für den vorausliegenden Streckenabschnitt auch die Verläufe der maximalen Dauerbremskraft F_{Br_max}(x_{F}), die in dem vorausliegenden Streckenabschnitt in dem aktuell eingelegten Gang G₀ und in einer festgelegten Anzahl höherer Gänge, vorliegend beispielhaft der beiden höheren Gänge (G₀ + 1 = 11 und G₀ + 2 = 12), möglich sind, bestimmt und in Relation zu dem Fahrwiderstandsprofil F_{FW}(x_{F}) bewertet.

Wenn nun der Verlauf der maximalen Dauerbremskraft F_{Br_max}(x_{F}) für den aktuell eingelegten Gang G₀ ausgehend von der aktuellen Fahrzeugposition (t = 0, x_{F} = 0) innerhalb einer vorgegebenen ersten Grenz-Fahrstrecke von vorliegend beispielhaft Δx_{H1} = 150 m den Verlauf des Fahrwiderstandsprofils F_{FW}(x_{F}) unterschreitet oder unter diesem liegt, d.h. ein Bremskraftüberschuss vorliegt, und wenn nachfolgend der Verlauf der maximalen Dauerbremskraft F_{Br_max}(x_{F}) mindestens eines höheren Gangs (G₀ + 1, G₀ + 2) den Verlauf des Fahrwiderstandsprofils F_{FW}(x_{F}) innerhalb einer vorgegebenen zweiten Grenz-Fahrstrecke von vorliegend Δx_{H2} = 250 m nicht überschreitet, d.h. eine Schub-Hochschaltung ohne Bremskraftmangel möglich ist, gilt ein im Vorfeld des Kraftfahrzeugs befindlicher Gefälleauslauf als erkannt. Demzufolge wird in diesem Fall eine Schub-Hochschaltung vorzeitig ausgelöst. Andernfalls, d.h. wenn mindestens eine dieser Bedingungen nicht erfüllt ist, wird eine Schub-Hochschaltung gesperrt, so dass diese auch nicht durch die normale Schaltsteuerung oder durch einen aktiven Bremsomaten, z.B. aufgrund des Unterschreitens einer Schaltdrehzahl oder einer Sollgeschwindigkeit, ausgelöst werden kann.

Als Zielgang der betreffenden Schub-Hochschaltung wird der höchstmögliche der höheren Gänge (G₀ + 1 = 11, G₀ + 2 = 12) bestimmt, dessen Verlauf der maximalen Dauerbremskraft F_{Br_max}(G₀ + 1), F_{Br_max}(G₀ + 2) den Verlauf des Fahrwiderstandsprofils F_{FW}(x_{F}) innerhalb der zweiten Grenz-Fahrstrecke Δx_{H2} nicht überschreitet. Dies trifft vorliegend auf den zweithöheren Gang G₀ + 2 = 12 zu, so dass die Schub-Hochschaltung in diesen Gang erfolgt.

Vorliegend wird die betreffende Schub-Hochschaltung beispielhaft am Ende der ersten Grenz-Fahrstrecke Δx_{H1}, d.h. ausgehend von der aktuellen Position (x_{F} = 0) nach einer Fahrstrecke von x_{F} = 150 m ausgelöst. Bedarfsweise kann diese Schaltung jedoch auch früher, d.h. zu einem beliebig wählbaren Zeit- oder Wegpunkt x_{F} innerhalb der ersten Grenz-Fahrstrecke Δx_{H1} ausgelöst werden, was z.B. über das Starten eines Zeit- oder Wegstreckenzählers gesteuert werden kann.

Die Schub-Hochschaltung äußert sich in einem sprunghaften Abfall der (negativen) maximalen Dauerbremskraft F_{Br_max}(x_{F}) (siehe Fig. 1 a), in dem Wechsel vom zehnten Gang in den zwölften Gang (siehe Fig. 1 b), und in einem sprunghaften Abfall der Motordrehzahl n_{Mot}(x_{F}) von der aktuellen Motordrehzahl von ca. n_{Mot}(0) = 1070 min⁻¹ auf etwa n_{Mot} = 810 min⁻¹ (siehe Fig. 1 c).

### Bezugszeichen

- F_{FW}: Fahrwiderstand
- F_{FW}(0): Aktueller Fahrwiderstand
- F_{Luft}: Luftwiderstand
- F_{Roll}: Rollwiderstand
- F_{Steig}: Steigungswiderstand
- F_{Br_max}: Maximale Dauerbremskraft
- G: Gang
- G₀: Aktuell eingelegter Gang
- G₀ - 1: Nächstniedrigerer Gang
- G₀ - 2: Zweitniedrigerer Gang
- G₀ + 1: Nächsthöherer Gang
- G₀ + 2: Zweithöherer Gang
- m_{Fzg}: Fahrzeugmasse
- M_{Mot}: Motormoment
- M_{Mot}(0): Aktuelles Motormoment
- n: Drehzahl
- n_{Mot}: Motordrehzahl
- n_{Mot}(0): aktuelle Motordrehzahl
- n_{G}: Anzahl von Gängen
- n_{GH}: Anzahl höherer Gänge
- n_{GR}: Anzahl niedrigerer Gänge
- t: Zeit, Fahrzeit
- v: Geschwindigkeit
- v_{Soll}: Sollgeschwindigkeit
- v_{F}: Fahrgeschwindigkeit
- v_{F}(0): Aktuelle Fahrgeschwindigkeit
- x_{F}: Fahrstrecke, Fahrstreckenvariable
- Δt_{H1}: Grenz-Fahrzeit mit beginnendem Bremskraftüberschuss
- Δt_{H2}: Grenz-Fahrzeit mit höherem Gang
- Δt_{R1}: Grenz-Fahrzeit mit beginnendem Bremskraftmangel
- Δt_{R2}: Grenz-Fahrzeit mit niedrigerem Gang
- Δx_{H1}: Grenz-Fahrstrecke mit beginnendem Bremskraftüberschuss
- Δx_{H2}: Grenz-Fahrstrecke mit höherem Gang
- Δx_{R1}: Grenz-Fahrstrecke mit beginnendem Bremskraftmangel
- Δx_{R2}: Grenz-Fahrstrecke mit niedrigerem Gang

## Patentansprüche

1. Verfahren zur Schaltsteuerung eines automatisierten Stufenschaltgetriebes, das in einem mit einer Dauerbremse versehenen Antriebsstrang eines Kraftfahrzeugs zwischen einem als Verbrennungsmotor ausgebildeten Antriebsmotor und einem Achsantrieb angeordnet ist, wobei während der Fahrt neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das Höhenprofil, ermittelt werden, daraus das Fahrwiderstandsprofil (F_{FW}(x_{F})) des Kraftfahrzeugs für den vorausliegenden Streckenabschnitt bestimmt wird, und im Automatikmodus des Stufenschaltgetriebes während eines Schubbetriebs Steuerbefehle für Schub-Rückschaltungen und/oder Schub-Hochschaltungen in Abhängigkeit des Fahrwiderstandsprofils (F_{FW}(x_{F})) abgeleitet und umgesetzt werden, **dadurch gekennzeichnet, dass** ausgehend von der aktuellen Fahrgeschwindigkeit (v_{F}(0)), der aktuellen Motordrehzahl (Mₘₒₜ(0)) und dem Fahrwiderstandsprofil (F_{FW}(x_{F})) die Verläufe der maximalen Dauerbremskraft (F_{Br_max}(x_{F})), die in dem vorausliegenden Streckenabschnitt in dem aktuell eingelegten Gang (G₀) und in dazu benachbarten Gängen jeweils möglich sind, bestimmt werden, und dass die Verläufe der maximalen Dauerbremskraft (F_{Br_max}(x_{F})) zur Ableitung von Steuerbefehlen für eine Schub-Rückschaltung und/oder Schub-Hochschaltung in Relation zu dem Fahrwiderstandsprofil (F_{FW}(x_{F})) bewertet werden, wobei anhand der relativen Verläufe des Fahrwiderstands und der maximalen Dauerbremskraft der betreffenden Gänge entschieden wird, ob abweichend bzw. ergänzend zu der normalen Schaltsteuerung eine Schub-Rückschaltung und/oder eine Schub-Hochschaltung vorzeitig ausgelöst oder gesperrt wird.

2. Verfahren nach Anspruch 1, **dadurch gekennzeichnet, dass** zur Ableitung von Steuerbefehlen für eine Schub-Rückschaltung die Verläufe der maximalen Dauerbremskraft (F_{Br_max}(G₀), F_{Br_max}(G₀ - 1), F_{Br_max}(G₀ - 2)), die in dem vorausliegenden Streckenabschnitt in dem aktuell eingelegten Gang (G₀) und in einer festgelegten Anzahl niedrigerer Gänge (n_{GR}) möglich sind, bestimmt und in Relation zu dem Fahrwiderstandsprofil (F_{FW}(x_{F})) bewertet werden.

3. Verfahren nach Anspruch 2, **dadurch gekennzeichnet, dass** eine Schub-Rückschaltung dann vorzeitig ausgelöst wird, wenn der Verlauf der maximalen Dauerbremskraft (F_{Br_max}(G₀)) für den aktuell eingelegten Gang (G₀) ausgehend von der aktuellen Fahrzeugposition (t = 0, x_{F} = 0) den Verlauf des Fahrwiderstandsprofils (F_{FW}(x_{F})) innerhalb einer vorgegebenen ersten Grenz-Fahrzeit (Δt_{R1}) oder Grenz-Fahrstrecke (Δx_{R1}) überschreitet und nachfolgend innerhalb einer vorgegebenen zweiten Grenz-Fahrzeit (Δt_{R2}) oder Grenz-Fahrstrecke (Δx_{R2}) nicht unterschreitet, und dass eine Schub-Rückschaltung andernfalls gesperrt wird.

4. Verfahren nach Anspruch 3, **dadurch gekennzeichnet, dass** der höchstmögliche der betreffenden niedrigeren Gänge (G₀ - 1, G₀ - 2) als Zielgang der Schub-Rückschaltung bestimmt wird, dessen Verlauf der maximalen Dauerbremskraft (F_{Br_max}(G₀ - 1), F_{Br_max}(G₀ - 2)) den Verlauf des Fahrwiderstandsprofils (F_{FW}(x_{F})) nach dem Auftreten des Bremskraftmangels in dem aktuell eingelegten Gang (G₀) innerhalb der zweiten Grenz-Fahrzeit (Δt_{R2}) oder Grenz-Fahrstrecke (Δx_{R2}) nicht überschreitet.

5. Verfahren nach Anspruch 3 oder 4, **dadurch gekennzeichnet, dass** der niedrigste der betreffenden niedrigeren Gänge (G₀ - 2) als Zielgang der Schub-Rückschaltung bestimmt wird, wenn der Verlauf der maximalen Dauerbremskraft (F_{Br_max}(x_{F})) dieses Gangs den Verlauf des Fahrwiderstandsprofils (F_{FW}(x_{F})) nach dem Auftreten des Bremskraftmangels in dem aktuell eingelegten Gang (G₀) innerhalb der zweiten Grenz-Fahrzeit (Δt_{R2}) oder Grenz-Fahrstrecke (Δx_{R2}) überschreitet.

6. Verfahren nach einem der Ansprüche 2 bis 5, **dadurch gekennzeichnet, dass** zur vorzeitigen Auslösung einer Schub-Rückschaltung der Wert des aktuellen Fahrwiderstands (F_{FW}(0)) durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils (F_{FW}(x_{F})) ersetzt wird, in dem der Verlauf der maximalen Dauerbremskraft (F_{Br_max}(G₀)) für den aktuell eingelegten Gang (G₀) über dem Verlauf des Fahrwiderstandsprofils (F_{FW}(x_{F})) liegt.

7. Verfahren nach einem der Ansprüche 2 bis 6, **dadurch gekennzeichnet, dass** zur vorzeitigen Auslösung einer Schub-Rückschaltung im Bremsomatbetrieb die Sollgeschwindigkeit (v_{Soll}) des Bremsomaten vorübergehend reduziert wird.

8. Verfahren nach einem der Ansprüche 2 bis 7, **dadurch gekennzeichnet, dass** zur Sperrung einer Schub-Rückschaltung der Wert des aktuellen Fahrwiderstands (F_{FW}(0)) durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils (F_{FW}(x_{F})) ersetzt wird, in dem der Verlauf der maximalen Dauerbremskraft (F_{Br_max}(G₀)) für den aktuell eingelegten Gang (G₀) unter dem Verlauf des Fahrwiderstandsprofils (F_{FW}(x_{F})) liegt.

9. Verfahren nach einem der Ansprüche 2 bis 8, **dadurch gekennzeichnet, dass** zur Sperrung einer Schub-Rückschaltung im Bremsomatbetrieb die Sollgeschwindigkeit (v_{Soll}) des Bremsomaten vorübergehend erhöht wird.

10. Verfahren nach einem der Ansprüche 1 bis 9, **dadurch gekennzeichnet, dass** zur Ableitung von Steuerbefehlen für eine Schub-Hochschaltung zusätzlich die Verläufe der maximalen Dauerbremskraft (F_{Br_max}(G₀ + 1), F_{Br_max}(G₀ + 2)), die in dem vorausliegenden Streckenabschnitt in einer festgelegten Anzahl höherer Gänge (n_{GH}) jeweils möglich sind, bestimmt und in Relation zu dem Fahrwiderstandsprofil (F_{FW}(x_{F})) bewertet werden.

11. Verfahren nach Anspruch 10, **dadurch gekennzeichnet, dass** eine Schub-Hochschaltung dann vorzeitig ausgelöst wird, wenn der Verlauf der maximalen Dauerbremskraft (F_{Br_max}(G₀)) für den aktuell eingelegten Gang (G₀) ausgehend von der aktuellen Fahrzeugposition (t = 0, x_{F} = 0) innerhalb einer vorgegebenen ersten Grenz-Fahrzeit (Δt_{H1}) oder Grenz-Fahrstrecke (Δx_{H1}) den Verlauf des Fahrwiderstandsprofils (F_{FW}(x_{F})) unterschreitet oder unter diesem liegt, und wenn nachfolgend der Verlauf der maximalen Dauerbremskraft (F_{Br_max}(G₀ + 1), F_{Br_max}(G₀ + 2)) mindestens eines höheren Gangs (G₀ + 1, G₀ + 2) den Verlauf des Fahrwiderstandsprofils (F_{FW}(x_{F})) innerhalb einer vorgegebenen zweiten Grenz-Fahrzeit (Δt_{H2}) oder Grenz-Fahrstrecke (Δx_{H2}) nicht überschreitet, und dass eine Schub-Hochschaltung andernfalls gesperrt wird.

12. Verfahren nach Anspruch 11, **dadurch gekennzeichnet, dass** der höchstmögliche der höheren Gänge (G₀ + 1, G₀ + 2) als Zielgang der Schub-Hochschaltung bestimmt wird, dessen Verlauf der maximalen Dauerbremskraft (F_{Br_max}(G₀ + 1), F_{Br_max}(G₀ + 2)) den Verlauf des Fahrwiderstandsprofils (F_{FW}(x_{F})) innerhalb der zweiten Grenz-Fahrzeit (Δt_{H2}) oder Grenz-Fahrstrecke (Δx_{H2}) nicht überschreitet, und dass eine Schub-Hochschaltung gesperrt wird, wenn diese Bedingung für keinen der höheren Gänge (G₀ + 1, G₀ + 2) erfüllt ist.

13. Verfahren nach einem der Ansprüche 10 bis 12, **dadurch gekennzeichnet, dass** zur vorzeitigen Auslösung einer Schub-Hochschaltung der Wert des aktuellen Fahrwiderstands (F_{FW}(0)) durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils (F_{FW}(x_{F})) ersetzt wird, in dem der Verlauf der maximalen Dauerbremskraft (F_{Br_max}(G₀)) für den aktuell eingelegten Gang (G₀) unter dem Verlauf des Fahrwiderstandsprofils (F_{FW}(x_{F})) liegt.

14. Verfahren nach einem der Ansprüche 10 bis 13, **dadurch gekennzeichnet, dass** zur vorzeitigen Auslösung einer Schub-Hochschaltung im Bremsomatbetrieb die Sollgeschwindigkeit (v_{Soll}) des Bremsomaten vorübergehend erhöht wird.

15. Verfahren nach einem der Ansprüche 10 bis 14, **dadurch gekennzeichnet, dass** zur Sperrung einer Schub-Hochschaltung der Wert des aktuellen Fahrwiderstands (F_{FW}(0)) durch den Wert des Fahrwiderstands an einem Wegpunkt vor dem Kraftfahrzeug oder durch den über einen Streckenbereich vor dem Kraftfahrzeug gemittelten Wert des Fahrwiderstandsprofils (F_{FW}(x_{F})) ersetzt wird, in dem der Verlauf der maximalen Dauerbremskraft (F_{Br_max}(G₀)) für den aktuell eingelegten Gang (G₀) über dem Verlauf des Fahrwiderstandsprofils (F_{FW}(x_{F})) liegt.

16. Verfahren nach einem der Ansprüche 10 bis 15, **dadurch gekennzeichnet, dass** zur Sperrung einer Schub-Hochschaltung im Bremsomatbetrieb die Sollgeschwindigkeit (v_{Soll}) des Bremsomaten vorübergehend reduziert wird.

17. Verfahren nach einem der Ansprüche 2 bis 16, **dadurch gekennzeichnet, dass** die vorzeitige Auslösung einer Schub-Rückschaltung innerhalb der Fahrzeit oder Fahrstrecke bis zum Auftreten eines Bremskraftmangels in dem aktuell eingelegten Gang (G₀) und die vorzeitige Auslösung einer Schub-Hochschaltung innerhalb der ersten Grenz-Fahrzeit (Δt_{H1}) oder Grenz-Fahrstrecke (Δx_{H1}) erfolgt.

18. Verfahren nach einem der Ansprüche 2 bis 17, **dadurch gekennzeichnet, dass** die Anzahl niedrigerer Gänge (n_{GR}) und die Anzahl höherer Gänge (n_{GH}), für welche die Verläufe der maximalen Dauerbremskraft (F_{Br_max}(x_{F})) ermittelt werden, jeweils fest vorgegeben ist.

19. Verfahren nach einem der Ansprüche 2 bis 17, **dadurch gekennzeichnet, dass** die Anzahl niedrigerer Gänge (n_{GR}) und die Anzahl höherer Gänge (n_{GH}), für welche die Verläufe der maximalen Dauerbremskraft (F_{Br_max}(x_{F})) ermittelt werden, jeweils als die Anzahl der Gänge bis einschließlich des mit dem höchstzulässigen Gangsprung erreichbaren niedrigeren bzw. höheren Gangs bestimmt wird.

20. Verfahren nach einem der Ansprüche 1 bis 19, **dadurch gekennzeichnet, dass** die Funktion zur vorzeitigen Auslösung und Sperrung einer Schub-Rückschaltung und/oder einer Schub-Hochschaltung nur in einem Bremsomatbetrieb aktiviert wird.

## Claims

1. Method for controlling shifting in an automated gear transmission which is arranged in a drive train, provided with a retarder, of a motor vehicle between a drive engine which is embodied as an internal combustion engine and an axle drive, wherein during travel not only current vehicle-specific, carriageway-specific and driver-specific operating parameters are obtained but also topographical data relating to a section of route lying ahead of the motor vehicle, in particular the altitude profile, and on the basis thereof the driving resistance profile (F_{FW}(x_{F})) of the motor vehicle for the section of route lying ahead is determined, and during overrun conditions in the automatic mode of the gear transmission control commands for overrun shifting-down operations and/or overrun shifting-up operations are derived and implemented as a function of the driving resistance profile (F_{FW}(x_{F})), **characterized in that** the progressions of the maximum retarder braking force (F_{Br_max} (x_{F})) which are respectively possible in the currently engaged gear speed (G₀) and in gear speeds adjacent thereto in the section of route lying ahead, are determined on the basis of the current velocity (v_{F}(0)), the current engine speed (M_{Mot}(0)) and the driving resistance profile (F_{FW}(x_{F})), and **in that** the progressions of the maximum retarder braking force (F_{Br_max} (x_{F})) are evaluated in order to derive control commands for an overrun shifting-down operation and/or overrun shifting-up operation in relation to the driving resistance profile (F_{FW}(x_{F})), wherein on the basis of the relative progressions of the driving resistance and the maximum retarder braking force of the respective gear speeds it is decided whether, in contrast to or in addition to the normal shift control, an overrun shifting-down operation and/or an overrun shifting-up operation is prematurely triggered or disabled.

2. Method according to Claim 1, **characterized in that**, in order to derive control commands for an overrun shifting-down operation, the progressions of the maximum retarder braking force (F_{Br_max} (G₀), F_{Br_max}(G₀ - 1), F_{Br_max}(G₀ - 2)) which are possible in the currently engaged gear speed (G₀) and in a defined number of relatively low gear speeds (n_{GR}) in the section of route lying ahead are determined and evaluated in relation to the driving resistance profile (F_{FW}(x_{F})).

3. Method according to Claim 2, **characterized in that** an overrun shifting-down operation is prematurely triggered when the progression of the maximum retarder braking force (F_{Br_max}(G₀)) for the currently engaged gear speed (G₀) exceeds, starting from the current vehicle position (t = 0, x_{F} = 0), the progression of the driving resistance profile (F_{FW}(x_{F})) within a predefined first limiting driving time (Δt_{R1}) or limiting driving distance (Δx_{R1}) and subsequently does not undershoot said progression within a predefined second limiting driving time (Δt_{R2}) or limiting driving distance (Δx_{R2}), and **in that** an overrun shifting-down operation is otherwise disabled.

4. Method according to Claim 3, **characterized in that** the maximum possible gear speed of the respective relatively low gear speeds (G₀ - 1, G₀ - 2) is determined as a target gear speed of the overrun shifting-down operation, the progression of which of the maximum retarder braking force (F_{Br_max} (G₀ - 1), F_{Br_max} (G₀ - 2)) does not exceed the progression of the driving resistance profile (F_{FW}(x_{F})) after the occurrence of the lack of braking force in the currently engaged gear speed (G₀) within the second limiting driving time (Δt_{R2}) or limiting driving distance (Δx_{F2}).

5. Method according to Claim 3 or 4, **characterized in that** the lowest of the respective relatively low gear speeds (G₀ - 2) is determined as a target gear speed of the overrun shifting-down operation if the progression of the maximum retarder braking force (F_{Br_max}(X_{F})) of this gear speed exceeds the progression of the driving resistance profile (F_{FW}(x_{F})) after the occurrence of the lack of braking force in the currently engaged gear speed (G₀) within the second limiting driving time (Δt_{R2}) or limiting driving distance (Δx_{R2}).

6. Method according to one of Claims 2 to 5, **characterized in that**, in order to prematurely trigger an overrun shifting-down operation, the value of the current driving resistance (F_{FW}(0)) is replaced by the value of the driving resistance at a waypoint ahead of the motor vehicle or by the value of the driving resistance profile (F_{FW}(x_{F})) which is averaged over a part of the route ahead of the motor vehicle, in which the progression of the maximum retarder braking force (F_{Br_max} (G₀)) for the currently engaged gear speed (G₀) is above the progression of the driving resistance profile (F_{FW}(x_{F})).

7. Method according to one of Claims 2 to 6, **characterized in that** in order to prematurely trigger an overrun shifting-down operation in the Bremsomat mode the set point speed (vₛₑₜₚ) of the Bremsomat is temporarily reduced.

8. Method according to one of Claims 2 to 7, **characterized in that**, in order to disable an overrun shifting-down operation, the value of the current driving resistance (F_{FW}(0)) is replaced by the value of the driving resistance at a waypoint ahead of the motor vehicle or by the value of the driving resistance profile (F_{FW}(x_{F})) which is averaged over a part of the route ahead of the motor vehicle in which the progression of the maximum retarder braking force (F_{Br_max} (G₀)) for the currently engaged gear speed (G₀) is below the progression of the driving resistance profile (F_{FW}(x_{F})).

9. Method according to one of Claims 2 to 8, **characterized in that** in order to disable an overrun shifting-down operation in the Bremsomat mode, the set point speed (vₛₑₜₚ) of the Bremsomat is temporarily increased.

10. Method according to one of Claims 1 to 9, **characterized in that** in order to derive control commands for an overrun shifting-up operation, the progressions of the maximum retarder braking force (F_{Br_max}(G₀ + 1), F_{Br_max}(G₀ + 2)) which are respectively possible in a defined number of relatively high gear speeds (n_{GH}) in the section of route lying ahead are additionally determined and evaluated in relation to the driving resistance profile (F_{FW}(x_{F})).

11. Method according to Claim 10, **characterized in that** an overrun shifting-up operation is prematurely triggered if the progression of the maximum retarder braking force (F_{Br_max}(G₀)) for the currently engaged gear speed (G₀) undershoots, starting from the current vehicle position (t = 0, x_{F} = 0), the progression of the driving resistance profile (F_{FW}(x_{F})) within a predefined first limiting driving time (Δt_{H1}) or limiting driving distance (Δx_{H1}) or is below said progression and if the progression of the maximum retarder braking force (F_{Br_max}(G₀ + 1), F_{Br_max}(G₀ + 2)) of at least one relatively high gear speed (G₀ + 1, G₀ + 2) subsequently does not exceed the progression of the driving resistance profile (F_{FW}(x_{F})) within a predefined second limiting driving time (Δt_{H2}) or limiting driving distance (Δx_{H2}), and **in that** an overrun shifting-up operation is otherwise disabled.

12. Method according to Claim 11, **characterized in that** the maximum possible gear speed of the relatively high gear speeds (G₀ + 1, G₀ + 2) is determined as a target gear speed of the overrun shifting-up operation, the progression of which of the maximum retarder braking force (F_{Br_max}(G₀ + 1), F_{Br_max}(G₀ + 2)) does not exceed the progression of the driving resistance profile (F_{FW}(x_{F})) within the second limiting driving time (Δt_{H2}) or limiting driving distance (Δx_{H2}), and **in that** an overrun shifting-up operation is disabled if this condition is not satisfied for any of the relatively high gear speeds (G₀ + 1, G₀ + 2).

13. Method according to one of Claims 10 to 12, **characterized in that** in order to prematurely trigger an overrun shifting-up operation, the value of the current driving resistance (F_{FW}(0)) is replaced by the value of the driving resistance at a waypoint ahead of the motor vehicle or by the value of the driving resistance profile (F_{FW}(x_{F})) which is averaged over a part of the route ahead of the motor vehicle, in which the progression of the maximum retarder braking force (F_{Br_max} (G₀)) for the currently engaged gear speed (G₀) is below the progression of the driving resistance profile (F_{FW}(x_{F})).

14. Method according to one of Claims 10 to 13, **characterized in that** in order to prematurely trigger an overrun shifting-up operation in the Bremsomat mode, the set point speed (vₛₑₜₚ) of the Bremsomat is temporarily increased.

15. Method according to one of Claims 10 to 14, **characterized in that** in order to disable an overrun shifting-up operation, the value of the current driving resistance (F_{FW}(0)) is replaced by the value of the driving resistance at a waypoint ahead of the motor vehicle or by the value of the driving resistance profile (F_{FW}(x_{F})) which is averaged over a part of the route ahead of the motor vehicle, in which the progression of the maximum retarder braking force (F_{Br_max} (G₀)) for the currently engaged gear speed (G₀) is above the progression of the driving resistance profile (F_{FW}(x_{F})).

16. Method according to one of Claims 10 to 15, **characterized in that** in order to disable an overrun shifting-up operation in the Bremsomat mode, the set point speed (vₛₑₜₚ) of the Bremsomat is temporarily reduced.

17. Method according to one of Claims 2 to 16, **characterized in that** the premature triggering of an overrun shifting-down operation takes place within the driving time or driving distance up to the occurrence of a lack of braking force in the currently engaged gear speed (G₀), and the premature triggering of an overrun shifting-up operation takes place within the first limiting driving time (Δt_{H1}) or limiting driving distance (Δx_{H1}).

18. Method according to one of Claims 2 to 17, **characterized in that** the number of relatively low gear speeds (n_{GR}) and the number of relatively high gear speeds (n_{GH}) for which the progressions of the maximum retarder braking force (F_{Br_max} (x_{F})) are obtained is respectively permanently predefined.

19. Method according to one of Claims 2 to 17, **characterized in that** the number of relatively low gear speeds (n_{GR}) and the number of relatively high gear speeds (n_{GH}) for which the progressions of the maximum retarder braking force (F_{Br_max} (x_{F})) are obtained is respectively determined as the number of gear speeds up to inclusively the relatively low or relatively high gear speed which can be achieved with the maximum permissible jump in gear speed.

20. Method according to one of Claims 1 to 19, **characterized in that** the function of the premature triggering and disabling of an overrun shifting-down operation and/or of an overrun shifting-up operation is activated only in a Bremsomat mode.

## Revendications

1. Procédé de commande des passages de rapport d'une boîte de vitesses étagées automatisée, disposée, dans une chaîne cinématique d'un véhicule automobile pourvue d'un frein permanent, entre un moteur d'entraînement réalisé sous la forme d'un moteur à combustion interne et un entraînement d'essieu, sachant que pendant la conduite, outre les paramètres de fonctionnement actuels propres au véhicule, à la voie de circulation et au conducteur, on calcule également sur une section de tronçon placée devant le véhicule automobile les données topographiques associées, notamment le profil de hauteur, et on détermine à partir de ces données le profil de résistance à la conduite (F_{FW}(x_{F})) du véhicule automobile pour la section de tronçon placée devant et on en déduit et on transpose, en mode automatique de la boîte de vitesses étagée, pendant un fonctionnement en poussée, les ordres de commande pour les passages de rapport inférieur en poussée et/ou les passages de rapport supérieur en poussée, en fonction du profil de résistance à la conduite (F_{FW}(x_{F})), **caractérisé en ce qu'**on détermine, à partir de la vitesse de conduite actuelle (v_{F}(0)), de la vitesse de rotation actuelle du moteur (M_{Mot}(0)) et du profil de résistance à la conduite (F_{FW}(x_{F})), les courbes de la force maximale de frein permanent (F_{Br_max}(x_{F}) respectivement possibles dans la section de tronçon placée devant, dans le rapport actuellement passé (G₀) et dans les rapports connexes et que les courbes de la force maximale de frein permanent (F_{Br_max}(x_{F})) sont analysées pour dériver les ordres de commande pour un passage de rapport inférieur en poussée et/ou un passage de rapport supérieur en poussée en relation avec le profil de résistance à la conduite (F_{FW}(x_{F})), sachant qu'on décide, à l'aide des courbes relatives de la résistance à la conduite et de la force maximale de frein permanent des rapports associés, si on déclenche ou on bloque prématurément, de façon divergente et/ou complémentaire à la commande des passages de rapport normale, un passage de rapport inférieur en poussée et/ou un passage de rapport supérieur en poussée.

2. Procédé selon la revendication 1, **caractérisé en ce que** pour dériver les ordres de commande pour un passage de rapport inférieur en poussée, on détermine les courbes de la force maximale de frein permanent (F_{Br_max}(G₀), F_{Br_max}(G₀ - 1), F_{Br_max}(G₀ - 2)) possibles dans la section de tronçon placée devant, dans le rapport actuellement passé (G₀) et dans un nombre établi de rapports inférieurs (n_{GR}) et qu'on les analyse en relation avec le profil de résistance à la conduite (F_{FW}(x_{F})).

3. Procédé selon la revendication 2, **caractérisé en ce qu'**un passage de rapport inférieur en poussée est prématurément déclenché lorsque la courbe de la force maximale de frein permanent (F_{Br_max}(G₀)) pour le rapport actuellement passé (G₀) à partir de la position de véhicule actuelle (t = 0, x_{F} = 0) dépasse la courbe du profil de résistance à la conduite (F_{FW}(x_{F})) pendant une première durée de conduite limite (Δt_{R1}) prédéfinie ou sur un premier tronçon de conduite limite (Δx_{R1}) prédéfini puis ne repasse pas en dessous de celle-ci pendant une deuxième durée de conduite limite (Δt_{R2}) prédéfinie ou tronçon de conduite limite (Δx_{R2}) et qu'un passage de rapport inférieur en poussée est sinon bloqué.

4. Procédé selon la revendication 3, **caractérisé en ce que** le plus haut possible des rapports inférieurs (G₀ - 1, G₀ - 2) concernés est défini comme le rapport cible du passage de rapport inférieur en poussée pour lequel la courbe de la force maximale de frein permanent (F_{Br_max}(G₀ - 1), F_{Br_max}(G₀ - 2)) ne dépasse pas la courbe du profil de résistance à la conduite (F_{FW}(x_{F})) après survenue du déficit de force de freinage dans le rapport actuellement passé (G₀) pendant la deuxième durée de conduite limite (Δt_{R2}) ou sur le deuxième tronçon de conduite limite (Δx_{R2}).

5. Procédé selon la revendication 3 ou 4, **caractérisé en ce que** le plus bas des rapports inférieurs (G₀ - 2) concernés est défini comme le rapport cible du passage de rapport inférieur en poussée lorsque la courbe de la force maximale de frein permanent (F_{Br_max}(x_{F})) de ce rapport dépasse la courbe du profil de résistance à la conduite (F_{FW}(x_{F})) après survenue du déficit de force de freinage dans le rapport actuellement passé (G₀) pendant la deuxième durée de conduite limite (Δt_{R2}) ou sur le deuxième tronçon de conduite limite (Δx_{R2}).

6. Procédé selon l'une quelconque des revendications 2 à 5, **caractérisé en ce que** pour déclencher prématurément un passage de rapport inférieur en poussée, la valeur de la résistance à la conduite (F_{FW}(0)) actuelle est remplacée par la valeur de la résistance à la conduite au niveau d'un point de virage devant le véhicule automobile ou par la valeur, moyennée sur une zone de tronçon devant le véhicule automobile, du profil de résistance à la conduite (F_{FW}(x_{F})), pour laquelle la courbe de la force maximale de frein permanent (F_{Br_max}(G₀)) pour le rapport actuellement passé (G₀) se situe au-dessus de la courbe du profil de résistance à la conduite (F_{FW}(x_{F})).

7. Procédé selon l'une quelconque des revendications 2 à 6, **caractérisé en ce que** pour déclencher prématurément un passage de rapport inférieur en poussée dans le mode de fonctionnement avec automate de freinage, la vitesse théorique (v_{Soll}) de l'automate de freinage est temporairement réduite.

8. Procédé selon l'une quelconque des revendications 2 à 7, **caractérisé en ce que** pour bloquer un passage de rapport inférieur en poussée, la valeur de la résistance à la conduite actuelle (F_{FW}(0)) est remplacée par la valeur de la résistance à la conduite au niveau d'un point de virage devant le véhicule automobile ou par la valeur, moyennée sur une zone de tronçon devant le véhicule automobile, du profil de résistance à la conduite (F_{FW}(x_{F})) pour laquelle la courbe de la force maximale de frein permanent (F_{Br_max}(G₀)) pour le rapport actuellement passé (G₀) se situe en-dessous de la courbe du profil de résistance à la conduite (F_{FW}(x_{F})).

9. Procédé selon l'une quelconque des revendications 2 à 8, **caractérisé en ce que** pour bloquer un passage de rapport inférieur en poussée dans le mode de fonctionnement avec automate de freinage, la vitesse théorique (v_{Soll}) de l'automate de freinage est temporairement augmentée.

10. Procédé selon l'une quelconque des revendications 1 à 9, **caractérisé en ce que** pour dériver les ordres de commande pour un passage de rapport supérieur en poussée, les courbes de la force maximale de frein permanent (F_{Br_max}(G₀ + 1), F_{Br_max}(G₀ + 2)) respectivement possibles dans la section de tronçon placée devant sont en outre déterminées dans un nombre établi de rapports supérieurs (n_{GH}) et sont analysées en relation avec le profil de résistance à la conduite (F_{FW}(x_{F})).

11. Procédé selon la revendication 10, **caractérisé en ce qu'**un passage de rapport supérieur en poussée est prématurément déclenché lorsque la courbe de la force maximale de frein permanent (F_{Br_max}(G₀)) pour le rapport actuellement passé (G₀) passe en dessous ou au-dessus, à partir de la position de véhicule actuelle (t = 0, x_{F} = 0), pendant une première durée de conduite limite (Δt_{H1}) prédéfinie ou sur un premier tronçon de conduite limite (Δx_{H1}) prédéfini, de la courbe du profil de résistance à la conduite (F_{FW}(x_{F})) et que lorsqu'ensuite la courbe de la force maximale de frein permanent (F_{Br_max}(G₀ + 1), F_{Br_max}(G₀ + 2)) d'au moins un rapport supérieur (G₀ + 1, G₀ + 2) ne dépasse pas la courbe du profil de résistance à la conduite (F_{FW}(x_{F})) pendant une deuxième durée de conduite limite (Δt_{H2}) prédéfinie ou sur un deuxième tronçon de conduite limite (Δx_{H2}) prédéfini et qu'un passage de rapport supérieur en poussée est sinon bloqué.

12. Procédé selon la revendication 11, **caractérisé en ce que** le plus haut possible des rapports supérieurs (G₀ + 1, G₀ + 2) est défini comme le rapport cible du passage de rapport supérieur en poussée pour lequel la courbe de la force maximale de frein permanent (F_{Br_max}(G₀ + 1), F_{Br_max}(G₀ + 2)) ne dépasse pas la courbe du profil de résistance à la conduite (F_{FW}(x_{F})) pendant la deuxième durée de conduite limite (Δt_{H2}) ou sur le deuxième tronçon de conduite limite (Δx_{H2}) et qu'un passage de rapport supérieur en poussée est bloqué lorsque cette condition n'est pas remplie pour aucun des rapports supérieurs (G₀ + 1, G₀ + 2).

13. Procédé selon l'une quelconque des revendications 10 à 12, **caractérisé en ce que** pour déclencher prématurément un passage de rapport supérieur en poussée, la valeur de la résistance à la conduite actuelle (F_{FW}(0)) est remplacée par la valeur de la résistance à la conduite au niveau d'un point de virage devant le véhicule automobile ou par la valeur, moyennée sur une zone de tronçon devant le véhicule automobile, du profil de résistance à la conduite (F_{FW}(x_{F})) pour laquelle la courbe de la force maximale de frein permanent (F_{Br_max} (G₀)) pour le rapport actuellement passé (G₀) se situe sous la courbe du profil de résistance à la conduite (F_{FW}(x_{F})).

14. Procédé selon l'une quelconque des revendications 10 à 13, **caractérisé en ce que** pour déclencher prématurément un passage de rapport supérieur en poussée dans le mode de fonctionnement avec automate de freinage, la vitesse théorique (v_{Soll}) de l'automate de freinage est temporairement augmentée.

15. Procédé selon l'une quelconque des revendications 10 à 14, **caractérisé en ce que** pour bloquer un passage de rapport supérieur en poussée, la valeur de la résistance à la conduite actuelle (F_{FW}(0)) est remplacée par la valeur de la résistance à la conduite au niveau d'un point de virage devant le véhicule automobile ou par la valeur, moyennée sur une zone de tronçon devant le véhicule automobile, du profil de résistance à la conduite (F_{FW}(x_{F})) pour laquelle la courbe de la force maximale de frein permanent (F_{Br_max}(G₀)) pour le rapport actuellement passé (G₀) se situe au-dessus de la courbe du profil de résistance à la conduite (F_{FW}(x_{F})).

16. Procédé selon l'une quelconque des revendications 10 à 15, **caractérisé en ce que** pour bloquer un passage de rapport supérieur en poussée dans le mode de fonctionnement avec automate de freinage, la vitesse théorique (v_{Soll}) de l'automate de freinage est temporairement réduite.

17. Procédé selon l'une quelconque des revendications 2 à 16, **caractérisé en ce que** le déclenchement prématuré d'un passage de rapport inférieur en poussée se produit pendant une durée de conduite ou sur un tronçon de conduite jusqu"à ce que se produise un déficit de force de freinage pour lequel le rapport actuellement passé (G₀) et jusqu'à ce que se produise le déclenchement prématuré d'un passage de rapport supérieur en poussée pendant la première durée de conduite limite (Δt_{H1}) ou sur le premier tronçon de conduite limite (Δx_{H1}).

18. Procédé selon l'une quelconque des revendications 2 à 17, **caractérisé en ce que** le nombre de rapports inférieurs (n_{GR}) et le nombre de rapports supérieurs (n_{GH}) pour lesquels les courbes de la force maximale de frein permanent (F_{Br_max}(x_{F})) sont déterminées est respectivement prédéfini de façon permanente.

19. Procédé selon l'une quelconque des revendications 2 à 17, **caractérisé en ce que** le nombre de rapports inférieurs (n_{GR}) et le nombre de rapports supérieurs (n_{GH}) pour lesquels les courbes de la force maximale de frein permanent (F_{Br_max}(x_{F})) sont déterminées est respectivement défini comme le nombre de rapports jusqu'au rapport, inclus, inférieur et/ou supérieur pouvant être atteint avec le saut de rapport maximal admis.

20. Procédé selon l'une quelconque des revendications 1 à 19, **caractérisé en ce que** la fonction servant à déclencher prématurément et bloquer un passage de rapport inférieur en poussée et/ou un passage de rapport supérieur en poussée n'est n'activée que dans un mode de fonctionnement avec automate de freinage.
